# EUROPEAN PATENT SPECIFICATION

(11) **EP 2 583 598 B1**
(45) Date of publication and mention of the grant of the patent: **05.08.2015**
(21) Application number: 12153112.3
(22) Date of filing: 30.01.2012
(51) Int. Cl.: A47J 39/00, A47J 31/00

(54) **Food carrier with integrated machinery for the preparation of infusions and / or hot beverages**
Lebensmittelträger mit integriertem Mechanismus zur Zubereitung von Infusionen und/oder heißen Getränken
Dispositif de transport d'aliments avec machinerie intégrée pour la préparation d'infusions et/ou boissons chaudes

(30) Priority: 18.10.2011 IT MI20110329 U
(43) Date of publication of application: 24.04.2013
(73) Proprietor: Buba's S.r.l., 06100 Perugia (IT)
(72) Inventor: Parodi, Matteo, 21061 Luino ( Varese ) (IT)
(74) Representative: Tarabbia, Luigi

(56) References cited:
- CH-A2- 699 674
- DE-U1- 29 907 455
- US-A- 3 275 393
- US-A- 6 123 010

## Description

The present invention relates to a food carrier provided with machinery for preparation of hot beverages and/or infusions (such as tea, coffee and the like).

It is known that in particularly narrow spaces such as corridors of trains or aeroplanes intended for passengers' transport, suitable food carriers or trolleys are used which have a particularly narrow and vertically extended conformation in plan view.

It is known from CH699674 a mobile trolley bringing a machine suitable for preparation of coffee or, more in general, similar beverages obtained by "warm water infusion": this machine is fed by an AC source and is deeply integrated in the mainframe of the trolley itself, in a way such that it is fixed with respect to the mainframe itself.

It is also known from US3275393 a mobile trolley having a two-separated-vanes structure dedicated to carry/store hot and cold meals or beverages: this trolley is explicitly designed for use on airplanes, but does not make any mention on the possibility to adopt/integrate a coffee-making machine (or more in general, a machine for the preparation of beverages by infusion), nor it shows or gives hints to the chance of having an extractable/storable machine of this kind with respect to the trolley's main structure.

Last but not least, it is known from DE29907455 a very cumbersome "mobile bar furniture set" wherein a coffee-making machine is fixedly mounted on top of a unit of this set: each of the furniture units has "movement capability" thanks to the presence of wheels underneath their bottom panel, but the huge coffee-making machine mounted on one of these furniture units is clearly not suitable to be stored in and/or extracted from the unit itself.

These food trolleys have a multiplicity of superposed storage drawers/levels and are also provided with suitable displacement means (swivelling wheels that can be conveniently locked or unlocked).

The devices hitherto briefly described are adapted to carry different types of ready foodstuffs or beverages, which generally are prepared in suitable compartments formed at the inside of the train or aeroplane; in spite of the variety of possible foods or beverages that can be preserved and transported, these food carriers have some drawbacks limiting the operating flexibility thereof.

In particular, a drawback connected with food trolleys of known type resides in that at the present state of the art they do not allow preparation "in real time" or upon request of hot beverages obtained by infusion such as tea or coffee; in fact, these beverages have to be previously prepared and stored (preferably, if they are to be served hot they must be bottled in hermetically-sealed suitable containers) and subsequently carried by means of the trolley.

The just described operating modes involve a reduction in the quality level of the dispensed/served beverage, and at all events give rise to problems due to the undesirable cooling of this type of beverages; in addition, as it is necessary to carry both the hermetically sealed containers and the equipment for serving the beverage (cups, spoons and others) the overall loading capacity of the trolley is limited, which is disadvantageous in terms of logistic management of the so-called "service runs".

The present invention therefore aims at conceiving a food trolley overcoming the above stated operating-flexibility limits and in particular aims at offering the possibility of dispensing hot beverages obtained by infusion, such as tea, coffee or the like, in real time.

In parallel to the above, the present invention also aims at conceiving a food trolley of simple and immediate use, capable of maintaining a high quality of the dispensed foods and beverages and at all events adapted to be operated in reduced spaces with appropriate steadiness and handiness.

The technical task mentioned and the aims specified are substantially achieved by an integrated food trolley having the features reproduced in one or more of the appended claims.

Description of a preferred but not exclusive embodiment of a food trolley according to the invention is now given by way of non-limiting example and illustrated in the accompanying drawings, in which:

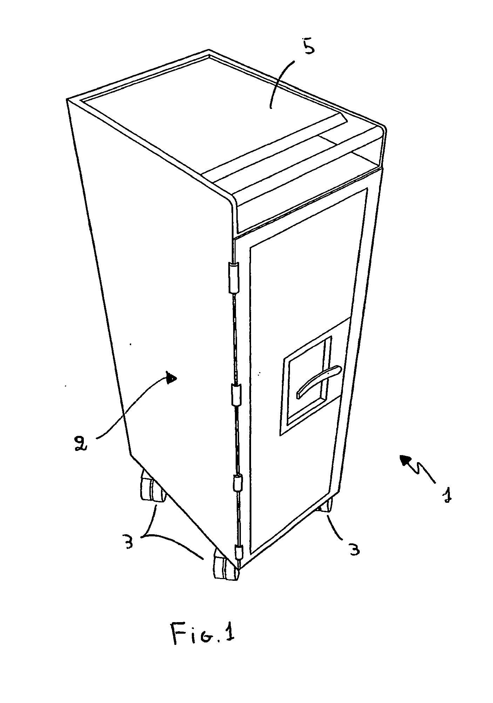

- Fig. 1 is a perspective view of the trolley according to the invention in a first operating configuration; and

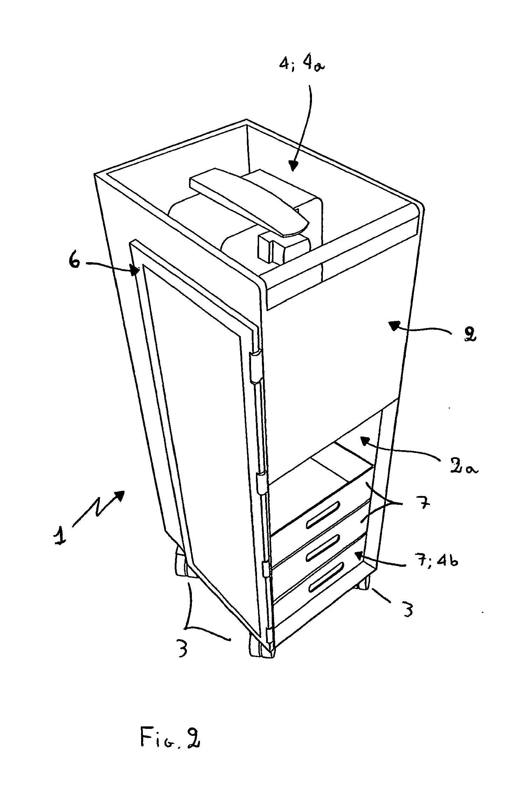

- Fig. 2 is a perspective view of the trolley according to the invention in a second operating configuration; and

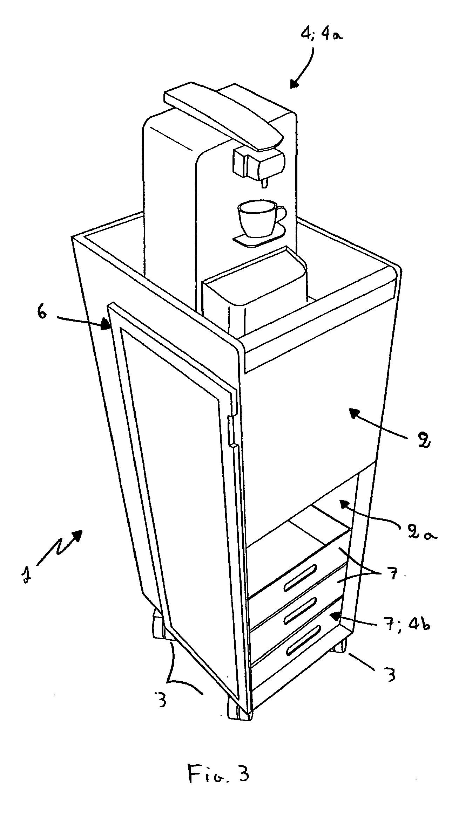

- Fig. 3 is a perspective view of the trolley according to the invention in a third operating configuration.

With reference to the accompanying drawings, the trolley according to the present invention is generally identified with reference numeral 1 and substantially comprises a main body 2 defining a loading volume, and suitable displacement means 3 (such as swivelling wheels or known devices of similar functional character) connected to the main body 2 at the lower part thereof.

Advantageously, the present invention that, as already seen, can be suitable for use on vehicles for passengers' transport such as trains or aeroplanes, comprises an operating unit 4 that is substantially self-governing from the point of view of energy consumption and use of water for preparation.

Such an operating unit 4 is adapted to prepare and dispense beverages obtained by infusion, such as tea or coffee or the like; depending on current requirements, the operating unit 4 can be implemented by adapting a common coffee-making machine that is electrically powered and supplied with common water and pre-packaged doses of substance for infusion (ground coffee, tea or tisane mixtures and so on).

To be pointed out at this point is the difference existing between the present invention and the previously described state of the art: in fact, due to self-government in supplying energy and "raw materials" (water and pre-packaged doses of material for infusion), it is possible to take the whole trolley directly to the customer's service place, preparing the finished product and dispensing it on the spot, which product at this point will have an optimal service temperature and degree of freshness and "quickness" that clearly cannot be reached when traditional preservation means (thermos carried by the trolley and similar objects) are available.

In more detail, it is possible to see that the just mentioned preparation and dispensing machine 4a is housed in a first portion of said loading volume, while a sub-unit for energy reserve and storage 4b, connected for energy supply to this preparation and dispensing machine 4a, is conveniently housed in a second portion of the loading volume.

Selection of the position of elements 4a and 4b can be done, in order to maximise the features connected with displacement of trolley 1; for instance, the first portion of the loading volume is placed close to and/or in the vicinity of an upper part of the main body 2 (or more generally on top of trolley 1), while the second portion of the loading volume is placed close to and/or in the vicinity of a lower part of the main body 2 (always generally speaking, at the bottom of trolley 1).

The above arrangement conveniently enables the centre of gravity of trolley 1 to be maintained as low as possible, so that steadiness of same is not jeopardised.

In turn, the energy reserve and storage sub-unit 4b can be such sized that it ensures both sufficient working time to the machine 4a and the possibility of being supplied with energy; to this aim, the sub-unit 4b comprises at least one electric accumulator to be connected to the preparation and dispensing machine 4a and a device for connection to an external energy supply (typical an electric network) for recharging.

By suitably selecting the sub-unit 4b it is possible to give the machine 4a an appropriate working self-government; for example, by adopting an electric battery of 24 V nominal voltage and 30 A/h capacity, an operating cycle for preparation of about 200 cups of coffee dispensed and produced on the spot, in a period of about 3 hours of use under standard conditions can be ensured to the machine 4a.

In addition, for optimising exploitation of the electric charge of the battery, the operating unit 4 can be provided with suitable control means acting on the machine 4a and/or the reserve and storage sub-unit 4b so that at least the electric energy consumption can be optimised; in this regard, it is to be pointed out that by adopting a controller normally available on the market, functions of energy saving and/or automated stand-by can be imposed to the machine 4a so that the machine will stop drawing current from the battery when it is not used for a predetermined period of time.

In order to keep an acceptable overall bulkiness, above all when trolley 1 is not in use, the preparation and dispensing machine 4a can be reversibly configured and therefore movable in space (at least relative to the main body 2) between a rest and transport position in which it is substantially contained inside the loading volume, and a working position in which, on the contrary, it is at least partly extracted from the loading volume.

Within the scope of the present invention, the machine 4a therefore appears to be accessible to an operator in correspondence with its working position.

In order to ensure the above mentioned position/configuration "reversibility", extraction means is present; this extraction means practically can be obtained by any kinematic device (elastic and/or hydraulic actuators suitably pre-loaded, or also electric motors or others, for example), provided said means can be activated at least on the preparation and dispensing machine 4a to reversibly shift it between the rest and transport position and the working position.

Practically, the extraction means enables an operator of trolley 1 to reach physical and functional access to the machine 4a only when real use of said machine is required by a customer/final user.

With reference to the drawings, it is possible to see that the extraction means is adapted to lift the preparation and dispensing machine 4a above the first portion of the loading volume, but obviously in accordance with the present invention other possible extraction directions of the machine 4a are possible, as well as different movement actions as to the extraction and retraction trajectories (by way of example only, "front" extraction by horizontal sliding elements, or "angular" extraction by rotation around axes parallel to the different vertices/corners of the main body 2).

In order to protect the machine 4a under non-use conditions, or at all events to exploit a work top when the machine 4a is not necessary, the present trolley can be provided with a closing cover 5 adapted to at least separate the first portion of the loading volume from the external environment at least at the rest and transport position of the preparation and dispensing machine 4a; this closing cover can be driven by the operator irrespective of operation of the extraction means, or it can be mechanically connected to said extraction means so that the joined and coordinated operation of the extraction means and closing cover 5 can be utilised.

Still from the point of view of accessibility, it is possible to notice that the present invention can have a closing wing 6 which is adapted to selectively make the loading volume 2a accessible also in the parts thereof where the different components of the operating unit 4 are not housed.

As regards exploitation of the loading volume 2a, it is possible - still with reference to the drawings - to notice the presence of a predetermined number of extractable compartments 7 placed inside the loading volume 2a; conveniently, at least one of these extractable compartments 7 (and preferably the lowermost compartment) is adapted to house the energy reserve and storage sub-unit 4b so as to lower the centre of gravity of trolley 1 as much as possible.

The invention achieves many advantages.

In fact, due to the particular construction architecture of the present trolley, it is possible to prepare beverages by infusion on the spot and therefore serve them in the right amount and at the optimal temperature; this enables use of the loading compartments of the trolley to be optimised, extending the true time of use of same without falling into quality decay of the dispensed product.

In addition, the present invention is able both to improve the work and service conditions of the operators and to ensure a sufficient independence in terms of energy; furthermore, due to the optimal positioning of the energy reserve and storage sub-unit, the trolley steadiness is greatly increased without in any case adversely affecting handiness and resistance/inertia to advancing.

A further advantage is the capability of confining/containing the machine 4a inside the loading volume 2a when it is not in use; this possibility not only protects the machine 4a against impacts or accidental shocks, but also prevents possible undesirable collision with the individuals occupying the external environment, which is particularly appreciable in case of passengers' transport by air.

Finally, the reduced overall number of parts and use of components easily available on the market make the present invention very reliable, easily maintainable and economically convenient.

## Claims

1. A food carrier or trolley to be used in vehicles for passengers' transport such as trains and aeroplanes, comprising:
- a main body (1) defining a loading volume; and
- displacement means (3) connected to said main body (2) at the lower part thereof,
- an operating unit (4) adapted to prepare and dispense beverages obtained by infusion, said beverages preferably being tea, coffee or the like, said operating unit (4) comprising:
- a preparation and dispensing machine (4a) housed in a first portion of said loading volume; and
- an energy reserve and storage sub-unit (4b) connected for energy supply to said preparation and dispensing machine (4a) and housed in a second portion of the loading volume.
**Characterized in that**
- it further comprises extraction means activable at least on the preparation and dispensing machine (4a) to reversibly shift it between a rest and transport position, in which it is substantially contained inside the loading volume, and a working position, in which it is at least partly extracted from the loading volume and is accessible to an operator.

2. A food carrier as claimed in claim 1, wherein said first portion of the loading volume is placed close to and/or in the vicinity of an upper part of the main body (2), said second portion of the loading volume being placed close to and/or in the vicinity of a lower part of the main body (2).

3. A food carrier as claimed in claim 1, wherein said energy reserve and storage sub-unit (4b) comprises:
- at least one electric accumulator connectable to the preparation and dispensing machine (4a); and
- a device for connection to an external energy supply, preferably an electric network, for recharging.

4. A food carrier as claimed in claim 1, wherein said extraction means is adapted to lift the preparation and dispensing machine (4a) above the first portion of the loading volume.

5. A food carrier as claimed in anyone of the preceding claims, wherein also present is a closing cover (5) adapted to separate at least the first portion of the loading volume from the external environment at least at the rest and transport position of the preparation and dispensing machine (4a).

6. A food carrier as claimed in anyone of the preceding claims, wherein also present is a closing wing (6) adapted to make the loading volume (2a) selectively accessible.

7. A food carrier as claimed in anyone of the preceding claims, wherein also present is a predetermined number of extractable compartments (7) placed inside the loading volume (2a), at least one of said extractable compartments (7) preferably being adapted to house the energy reserve and storage sub-unit (4b).

## Patentansprüche

1. Lebensmittelträger beziehungsweise Handwagen zur Verwendung in Fahrzeugen zum Transport von Passagieren wie Zügen und Flugzeugen, umfassend:
- einen Hauptkörper (1), der ein Bestückungsvolumen definiert; und
- Verschiebungsmittel (3), die mit dem Hauptkörper (2) an dessen unterem Teil verbunden sind,
- eine Betriebseinheit (4), die zur Zubereitung und Ausgabe von Getränken geeignet ist, die durch Infusion erhalten werden, wobei die Getränke vorzugsweise Tee, Kaffee oder dergleichen sind, wobei die Betriebseinheit (4) Folgendes umfasst:
- eine Zubereitungs- und Ausgabemaschine (4a), die in einem ersten Abschnitt des Bestückungsvolumens untergebracht ist; und
- eine Energiereserven- und Aufbewahrungsuntereinheit (4b), die zur Energieversorgung mit der Zubereitungs- und Ausgabemaschine (4a) verbunden und in einem zweiten Abschnitt des Bestückungsvolumens untergebracht ist,
**dadurch gekennzeichnet, dass**
- er ferner ein Ausziehmittel umfasst, das zumindest auf der Zubereitungs- und Ausgabemaschine (4a) aktivierbar ist, um sie zwischen einer Ruhe- und Transportposition, in der sie im Wesentlichen innerhalb des Bestückungsvolumens enthalten ist, und einer Arbeitsposition, in der sie zumindest teilweise aus dem Bestückungsvolumen ausgezogen und für einen Bediener zugänglich ist, umkehrbar zu verlagern.

2. Lebensmittelträger nach Anspruch 1, wobei der erste Abschnitt des Bestückungsvolumens dicht am und/oder in der Nähe eines oberen Teils des Hauptkörpers (2) platziert ist, wobei der zweite Abschnitt des Bestückungsvolumens dicht am und/oder in der Nähe eines unteren Teils des Hauptkörpers (2) platziert ist.

3. Lebensmittelträger nach Anspruch 1, wobei die Energiereserven- und Aufbewahrungsuntereinheit (4b) Folgendes umfasst:
- mindestens einen elektrischen Akkumulator, der mit der Zubereitungs- und Ausgabemaschine (4a) verbindbar ist; und
- eine Vorrichtung zur Verbindung mit einer externen Energieversorgung, vorzugsweise einem elektrischen Netz, zum Wiederaufladen.

4. Lebensmittelträger nach Anspruch 1, wobei das Ausziehmittel zum Heben der Zubereitungs- und Ausgabemaschine (4a) über den ersten Abschnitt des Bestückungsvolumens geeignet ist.

5. Lebensmittelträger nach einem der vorangehenden Ansprüche, wobei ferner ein Schließdeckel (5) vorhanden ist, der zur Trennung zumindest des ersten Abschnitts des Bestückungsvolumens von der äußeren Umgebung zumindest in der Ruhe- und Transportposition der Zubereitungs- und Ausgabemaschine (4a) geeignet ist.

6. Lebensmittelträger nach einem der vorangehenden Ansprüche, wobei ferner ein Schließflügel (6) vorhanden ist, der dazu geeignet ist, das Bestückungsvolumen (2a) wahlweise zugänglich zu machen.

7. Lebensmittelträger nach einem der vorangehenden Ansprüche, wobei ferner eine vorgegebene Anzahl ausziehbarer Fächer (7) vorhanden ist, die innerhalb des Bestückungsvolumens (2a) platziert sind, wobei mindestens eines der ausziehbaren Fächer (7) vorzugsweise zur Unterbringung der Energiereserven- und Aufbewahrungsuntereinheit (4b) geeignet ist.

## Revendications

1. Dispositif de transport d'aliments ou chariot à utiliser dans des véhicules destinés au transport de passagers tels que les trains et les avions, comprenant :
- un corps principal (1) définissant un volume de chargement ; et
- des moyens de déplacement (3) reliés au dit corps principal (2) au niveau de sa partie inférieure,
- une unité fonctionnelle (4) pouvant préparer et distribuer des boissons obtenues par infusion, lesdites boissons étant de préférence du thé, du café ou similaire, ladite unité fonctionnelle (4) comprenant :
- une machine de préparation et de distribution (4a) logée dans une première portion dudit volume de chargement ; et
- un module de stockage et de réserve en énergie (4b) relié pour alimenter en énergie ladite machine de préparation et de distribution (4a) et logé dans une seconde portion du volume de chargement,
**caractérisé en ce qu'**
- il comprend de plus un moyen d'extraction actionnable au moins sur la machine de préparation et de distribution (4a) pour la déplacer de façon réversible entre une position de repos et une position de transport, dans laquelle elle est substantiellement contenue à l'intérieur du volume de chargement, et une position de fonctionnement, dans laquelle elle est au moins en partie extraite du volume de chargement et est accessible par un opérateur.

2. Dispositif de transport d'aliments selon la revendication 1, dans lequel ladite première portion du volume de chargement est placée près et/ou à proximité d'une partie supérieure du corps principal (2), ladite seconde portion du volume de chargement étant placée près et/ou à proximité d'une partie inférieure du corps principal (2).

3. Dispositif de transport d'aliments selon la revendication 1, dans lequel ledit module de stockage et de réserve en énergie (4b) comprend :
- au moins un accumulateur électrique pouvant être branché à la machine de préparation et de distribution (4a) ; et
- un dispositif de branchement à un approvisionnement en énergie externe, de préférence un réseau électrique, pour recharger.

4. Dispositif de transport d'aliments selon la revendication 1, dans lequel ledit moyen d'extraction peut soulever la machine de préparation et de distribution (4a) au-dessus de la première portion du volume de chargement.

5. Dispositif de transport d'aliments selon l'une quelconque des revendications précédentes, dans lequel il est aussi prévu un couvercle de fermeture (5) apte à séparer au moins la première portion du volume de chargement de l'environnement extérieur au moins lors de la position de repos et de transport de la machine de préparation et de distribution (4a).

6. Dispositif de transport d'aliments selon l'une quelconque des revendications précédentes, dans lequel il est aussi prévu une aile de fermeture (6) pouvant rendre accessible, de façon sélective, le volume de chargement (2a).

7. Dispositif de transport d'aliments selon l'une quelconque des revendications précédentes, dans lequel il est aussi prévu un nombre prédéterminé de compartiments extractibles (7) placés à l'intérieur du volume de chargement (2a), au moins un desdits compartiments extractibles (7) étant de préférence apte à loger le module de stockage et de réserve d'énergie (4b).
